# EUROPEAN PATENT SPECIFICATION

(11) **EP 3 970 460 B1**
(45) Date of publication and mention of the grant of the patent: **13.11.2024**
(21) Application number: 21205620.4
(22) Date of filing: 19.12.2016
(51) Int. Cl.: A01B 33/02

(54) **WALKING-TYPE TILLING MACHINE**
GEHBODENBEARBEITUNGSMASCHINE
MOTOCULTEUR

(30) Priority: 21.09.2016 JP 2016184608
(43) Date of publication of application: 23.03.2022
(62) Divisional of application: 16205184.1
(73) Proprietor: Iseki & Co., Ltd., Matsuyama-shi, Ehime 799-2692 (JP)
(72) Inventor: YOSHII, Akira, Tobe-Cho, Iyo-gun, Ehime 791-2193 (JP); KURODA, Kyosei, Tobe-Cho, Iyo-gun, Ehime 791-2193 (JP); MIYAUCHI, Masao, Tobe-Cho, Iyo-gun, Ehime 791-2193 (JP); TOMIHISA, Akira, Tobe-Cho, Iyo-gun, Ehime 791-2193 (JP)
(74) Representative: Spengler, Robert

(56) References cited:
- EP-A1- 1 329 147
- JP-A- 2012 085 589
- JP-U- S4 864 311

## Description

### BACKGROUND OF THE INVENTION

### Field of the Invention

The present invention relates to a walking-type tilling machine for performing tilling working.

Known is a walking-type tilling machine, comprising a tilling device, a fuel tank, and a handle structure-body which rearwardly extends, the handle structure-body being attached to the machine-body (for example, refer to Japanese Patent Publication No. 5769946).

In a walking-type tilling machine like this, a portable oil-supplying tank for performing oil-supplying of the fuel tank is placed on the reverse face side of the handle structure-body being folded.

Document JP S48 64311 U discloses a walking-type tilling machine, comprising a machine-body; a tilling device attached to the machine-body; a fuel tank attached to the machine-body; a handle structure-body which rearwardly extends, the handle structure-body being attached to the machine-body; and an oil-supplying tank placement plate which has a placement face on which a portable oil-supplying tank for performing oil-supplying of the fuel tank is placed, wherein the oil-supplying tank placement plate is attached to a front side of the handle structure-body, the oil-supplying tank placement plate is rotatably attached, in a use state where the oil-supplying tank is placed on the oil-supplying tank placement plate, the oil-supplying tank placement plate is made to rotate so that the placement face faces upward, and in a non-use state where the oil-supplying tank is not placed on the oil-supplying tank placement plate, the oil-supplying tank placement plate is made to rotate so that the placement face is set along the handle structure-body.

### SUMMARY OF THE INVENTION

However, the present inventors have noticed that, in the above described conventional walking-type tilling machine, oil-supplying working is still difficult.

And, the present inventors conceive, in view of diversification of workers and the like, that it is important to further facilitate oil-supplying working.

An object of the present invention is, in consideration of the above described conventional problem, to furnish a walking-type tilling machine for which oil-supplying working can be facilitated.

The present invention is a walking-type tilling machine, comprising:
a machine-body (10);
a tilling device (40) attached to the machine-body (10);
a fuel tank (50) attached to the machine-body (10);
a handle structure-body (100) which extends upwardly and rearwardly with reference to a frontward movement direction, the handle structure-body (100) being attached to the machine-body (10); and
an oil-supplying tank placement plate (200) which has a placement face (201) on which a portable oil-supplying tank (60) for performing oil-supplying of the fuel tank (50) is placed,
characterized in that
the oil-supplying tank placement plate (200) is attached to a front side of the handle structure-body (100) with reference to the frontward movement direction;
the oil-supplying tank placement plate (200) is rotatably attached,
in a use state where the oil-supplying tank (60) is placed on the oil-supplying tank placement plate (200), the oil-supplying tank placement plate (200) is made to rotate so that the placement face (201) faces upward, and
in a non-use state where the oil-supplying tank (60) is not placed on the oil-supplying tank placement plate (200), the oil-supplying tank placement plate (200) is made to rotate so that the placement face (201) is set along the handle structure-body (100), wherein
the handle structure-body (100) has a handle part (110) and a handle frame (120),
the handle part (110) has a left side handle part (110L) and a right side handle part (110R), a connection member (300) is provided which connects the left side handle part (110L) and the right side handle part (110R),
the oil-supplying tank placement plate (200) is rotatably attached to the connection member (300), and
the walking-type tilling machine comprises a hinge (500) one end part (500a) of which is attached to the oil-supplying tank placement plate (200), and another end part (500b) of which is attached to the connection member (300).

By means of this, since the oil-supplying tank placement plate (200) is attached to the front side of the handle structure-body (100), oil-supplying working can be facilitated.

Since the oil-supplying tank placement plate (200) is rotatably attached, convenience can be improved.

Since the oil-supplying tank placement plate (200) is attached to the connection member (300) which connects the left side handle part (110L) and the right side handle part (110R), a configuration which is simple and compact can be realized.

Since comprising a hinge (500), a configuration which is simpler and more compact can be realized.

By the present invention, a walking-type tilling machine for which oil-supplying working is able to be facilitated can be furnished.

### BRIEF DESCRIPTION OF THE DRAWINGS

FIG. 1A is a left side view of the walking-type tilling machine of the embodiment in the present invention (No. 1), and
FIG. 1B is a left side view of the walking-type tilling machine of the embodiment in the present invention (No. 2);
FIG. 2 is a left side view of the neighborhood of the oil-supplying tank placement plate of the walking-type tilling machine of the embodiment in the present invention (No. 1);
FIG. 3 is a left side view of the neighborhood of the oil-supplying tank placement plate of the walking-type tilling machine of the embodiment in the present invention (No. 2);
FIG. 4 is a perspective view of the neighborhood of the handle structure-body of the walking-type tilling machine of the embodiment in the present invention (No. 1);
FIG. 5 is a perspective view of the neighborhood of the handle structure-body of the walking-type tilling machine of the embodiment in the present invention (No. 2);
FIG. 6 is a perspective view of the neighborhood of the handle structure-body of the walking-type tilling machine of the embodiment in the present invention (No. 3);
FIG. 7 is a perspective view of the neighborhood of the handle structure-body of the walking-type tilling machine of the embodiment in the present invention (No. 4);
FIG. 8A is a schematic perspective view of the neighborhood of the hinge of the walking-type tilling machine of the embodiment in the present invention (No. 1), and
FIG. 8B is a schematic perspective view of the neighborhood of the hinge of the walking-type tilling machine of the embodiment in the present invention (No. 2);
FIG. 9 is a schematic perspective view of the neighborhood of the left side connection member attachment tool and the right side connection member attachment tool of the walking-type tilling machine of the embodiment in the present invention;
FIG. 10 is a schematic perspective view of the neighborhood of the cap rest of the walking-type tilling machine of the embodiment in the present invention; and
FIG. 11 is a schematic cross-section view of the neighborhood of the cap rest of the walking-type tilling machine of another embodiment in the present invention.

### Description of the Reference Numerals

- 10: machine-body
- 11L: left side transport wheel
- 11R: right side transport wheel
- 20: engine
- 21: engine switch
- 30: transmission case
- 40: tilling device
- 40a: tilling shaft
- 40b: tilling claw
- 50: fuel tank
- 51: fuel tank cap
- 60: oil-supplying tank
- 61: oil-supplying tank cap
- 100: handle structure-body
- 110: handle part
- 110L: left side handle part
- 110R: right side handle part
- 120: handle frame
- 130: handle adjustment knob
- 200: oil-supplying tank placement plate
- 201: placement face
- 210: oil-supplying tank placement plate rim
- 220: oil-supplying tank placement plate hole
- 300: connection member
- 310L: left side connection member attachment tool
- 310R: right side connection member attachment tool
- 311L, 312L: left side fastening member
- 311R, 312R: right side fastening member
- 320L: left side hook
- 320R: right side hook
- 400: cap rest
- 411, 412: cap hole
- 421, 422: cap supporting section
- 500: hinge
- 600: spring
- 700: machine-body frame
- 701: fender
- 702: belt cover
- 703: bracket
- 704: hood
- 705: hitch
- 706: pin
- 707: resistance bar
- 707a: opening
- 708: ridge forming plate
- 709: arrow
- 710: arrow
- 711: arrow
- 712: rotation fulcrum
- 713L: left side lower portion
- 713R: right side lower portion
- 714: arrow
- 715: arrow

### DESCRIPTION OF THE EMBODIMENTS

In the following, referring to the drawings, descriptions are given in detail regarding embodiments in the present invention.

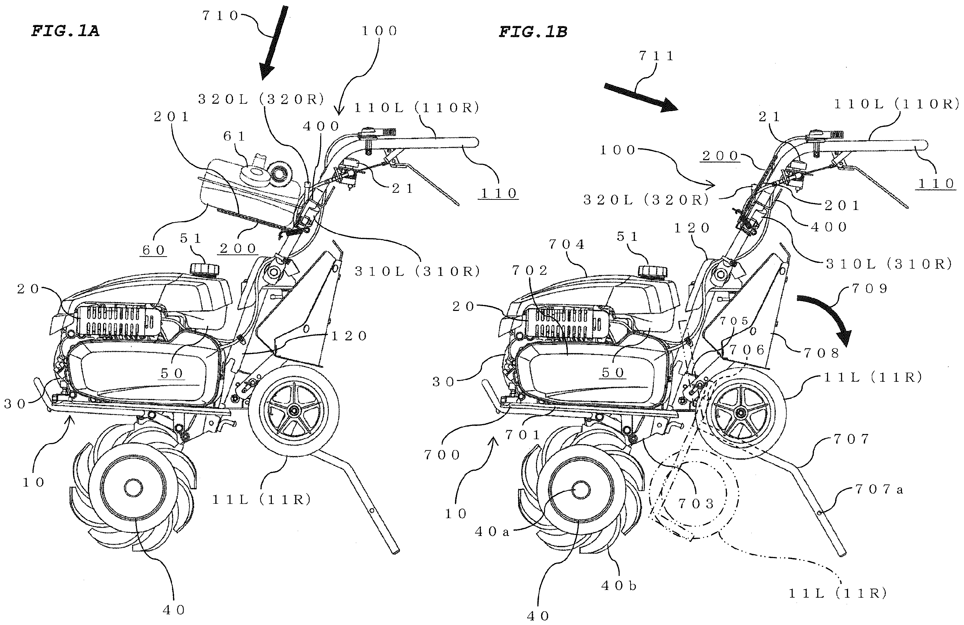

In the beginning, referring to FIGs. 1 to 3, descriptions are specifically given regarding the configuration and action of a walking-type tilling machine of the present embodiment.

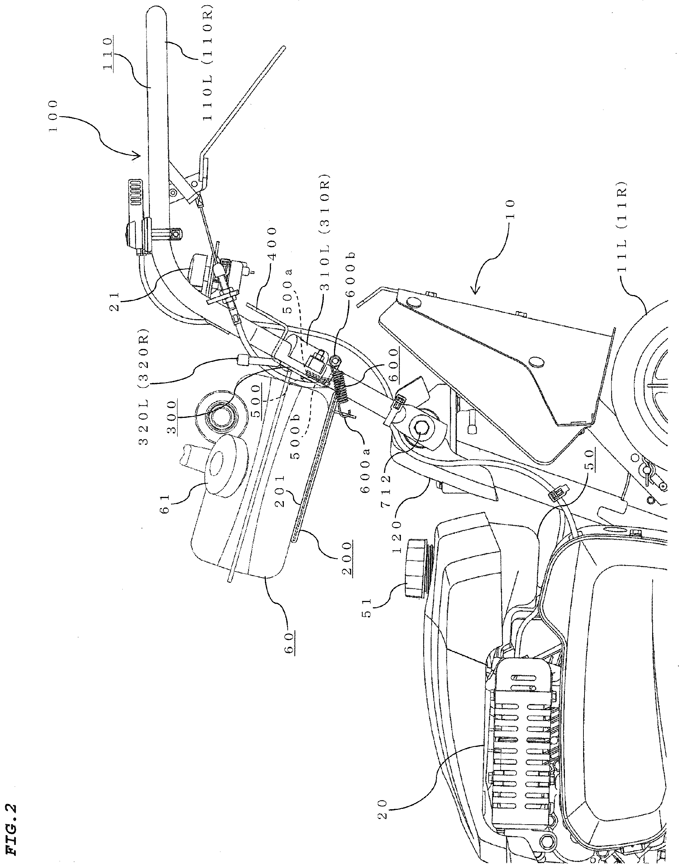

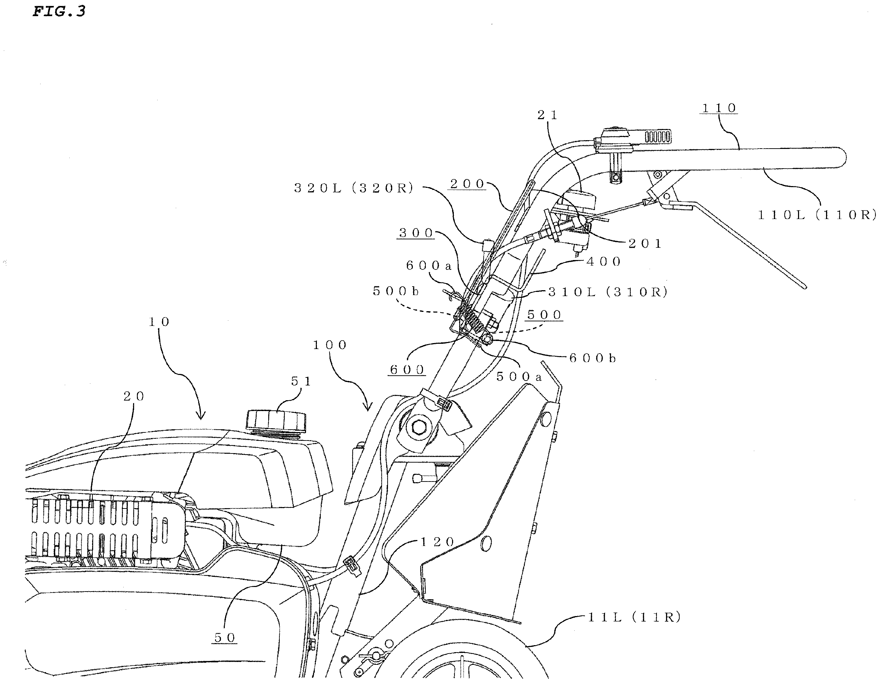

Here, FIGs. 1A and 1B are left side views of the walking-type tilling machine of the embodiment in the present invention (Nos. 1 and 2), and FIGs. 2 and 3 are left side views of the neighborhood of an oil-supplying tank placement plate 200 of the walking-type tilling machine of the embodiment in the present invention (Nos. 1 and 2).

In FIGs. 1A and 2, the state where the oil-supplying tank placement plate 200 is used is shown. In FIGs. 1B and 3, the state where the oil-supplying tank placement plate 200 is not used is shown.

At the front part of a machine-body 10, a machine-body frame 700 is provided. Above the machine-body frame 700, an engine 20 has been placed so as to sandwich in a fender 701 which covers a tilling device 40. At the rear part of the machine-body frame 700, a transmission case 30 is provided.

To the upper part of the engine 20, a fuel tank 50 is attached. A hood 704 is attached so as to cover the engine 20 and the fuel tank 50.

Rotary motive force of the engine 20 is transmitted to the upper part of the transmission case 30 by a belt covered with a belt cover 702. And, the rotary motive force with speed-decreasing having been carried out at the transmission case 30 is transmitted to the tilling device 40 via a tilling shaft 40a. To the tilling device 40, plural tilling claws 40b are attached.

A handle structure-body 100 is a structure-body which rearwardly extends, the structure-body being attached to the machine-body 10 together with the tilling device 40 and the fuel tank 50.

To the rear side of the transmission case 30, a bracket 703 is attached. To the bracket 703, the base part of the handle structure-body 100 is attached.

To the rear side of the bracket 703, a hitch 705 has been fixed. To the hitch 705, a resistance bar 707 is attached with a pin 706. When the tilling device 40 acts, then propelling force which promotes frontward movement is generated together with tilling force. When a handle part 110 is pushed towards the ground, and the resistance by the resistance bar 707 is made to increase, then the frontward movement is suppressed. Conversely, when the handle part 110 is lifted up, and the resistance by the resistance bar 707 is made to decrease, then the frontward movement is promoted. In FIGs. 1A and 1B, the resistance bar 707 at the time of tilling working is shown, and a left side transport wheel 11L and a right side transport wheel 11R of tilling posture, which are attached to the resistance bar 707, do not contact the ground.

In the case of movement on the road or the like, the resistance bar 707 is inverted by 180 degrees in the up-and-down direction, and the position of an opening 707a of the resistance bar 707 is matched to the position of an opening of the hitch 705. At the resistance bar 707 the left side transport wheel 11L and the right side transport wheel 11R are provided and, when the resistance bar 707 is inverted by 180 degrees, then the left side transport wheel 11L and the right side transport wheel 11R of movement posture contact the ground, as is indicated with two-dot chain lines.

To the hitch 705, a ridge forming plate 708 is also attached. In FIGs. 1A and 1B, the ridge forming plate 708 in the non-use state is shown. In the case where the ridge forming plate 708 is used, the resistance bar 707 is detached in the first place, the ridge forming plate 708 is made to rotate in the direction of an arrow 709 and is fixed with a pin, and the resistance bar 707 is again attached to the hitch 705 with the pin 706.

The oil-supplying tank placement plate 200 is a plate which has a placement face 201 on which a portable oil-supplying tank 60 for performing oil-supplying of the fuel tank 50 is placed, the plate being rotatably attached to the front side of the handle structure-body 100.

The portable oil-supplying tank 60 which is placed on the placement face 201 may be configured as a metal member, or may be configured as a resin member.

In the use state where the oil-supplying tank 60 is placed on the oil-supplying tank placement plate 200, the oil-supplying tank placement plate 200 is made to rotate so that the placement face 201 faces upward.

The placement face 201 in the horizontality state is higher than the full-tank oil level of the fuel tank 50. Hence, the position of the filler port of the oil-supplying tank 60 does not become too low, and oil-supplying working is facilitated.

The position of the front side of the placement face 201 made to rotate so as to face upward is slightly higher than the position of the rear side of the placement face 201. Hence, the oil-supplying tank 60 placed on the oil-supplying tank placement plate 200 is less prone to frontwardly tumble and, since a connection member 300 and the like function as stoppers, is also less prone to rearwardly tumble.

The oil-supplying tank 60 placed on the oil-supplying tank placement plate 200 may be fixed to the oil-supplying tank placement plate 200 utilizing an oil-supplying tank fixation rope which is engagable with an oil-supplying tank placement plate hole 220 bored in the oil-supplying tank placement plate 200, or may be fixed to the oil-supplying tank placement plate 200 utilizing a hook-and-loop fastener or a resin band.

When the oil-supplying tank placement plate 200 does not exist, then a worker has to operate an oil-supplying tool with the right hand, for example, holding the oil-supplying tank 60 in the neighborhood of the fuel tank 50 with the left hand. Of course, some workers place the oil-supplying tank 60 on the exterior part of the machine-body 10, but there is a fear that the exterior part is damaged, and there is also a fear that the oil-supplying tank 60 inclines and/or falls down. In the present embodiment, the oil-supplying tank 60 is placed on the oil-supplying tank placement plate 200, and oil-supplying working is facilitated.

In the non-use state where the oil-supplying tank 60 is not placed on the oil-supplying tank placement plate 200, the oil-supplying tank placement plate 200 is made to rotate so that the placement face 201 is set along the handle structure-body 100.

The oil-supplying tank placement plate 200, which has been made to rotate so that the placement face 201 is set along the handle structure-body 100, does not become a hindrance in the case where the worker wants to operate a handle adjustment knob 130 and make the handle part 110 rotate for handle working-height adjustment, handle folding which realizes machine-body length shortening at the time of haul-truck loading, or the like.

And, the oil-supplying tank placement plate 200 may be configured as a metal member utilizing a metal plate, or may be configured as a resin member utilizing transparent resin, so that lowering of the forward visibility is less prone to be generated.

Further, the oil-supplying tank placement plate 200 is light, and the worker can make the oil-supplying tank placement plate 200 rotate only with the left or right hand.

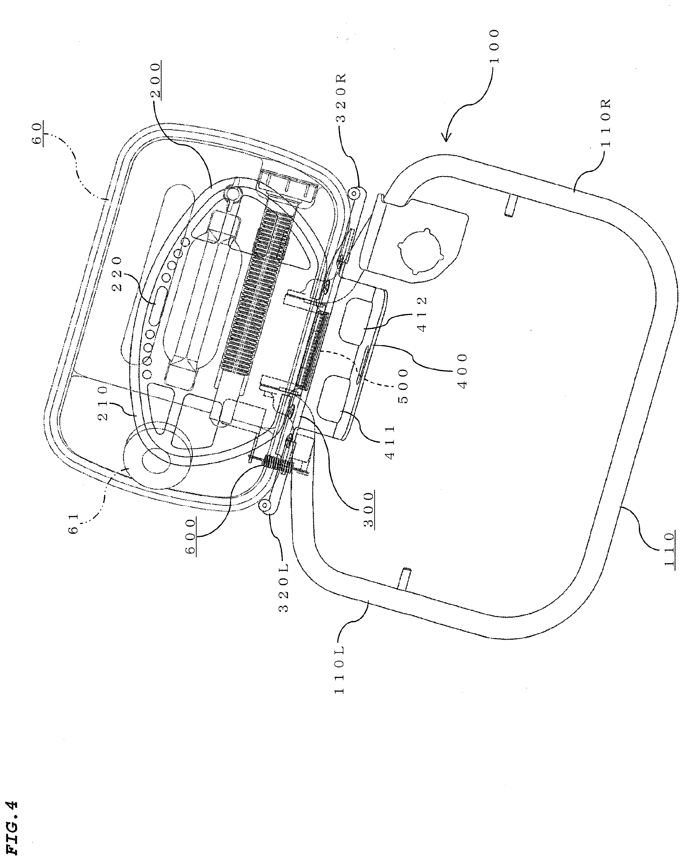

Next, mainly referring to FIGs. 4 to 8, descriptions are more specifically given regarding the configuration and action of the walking-type tilling machine of the present embodiment.

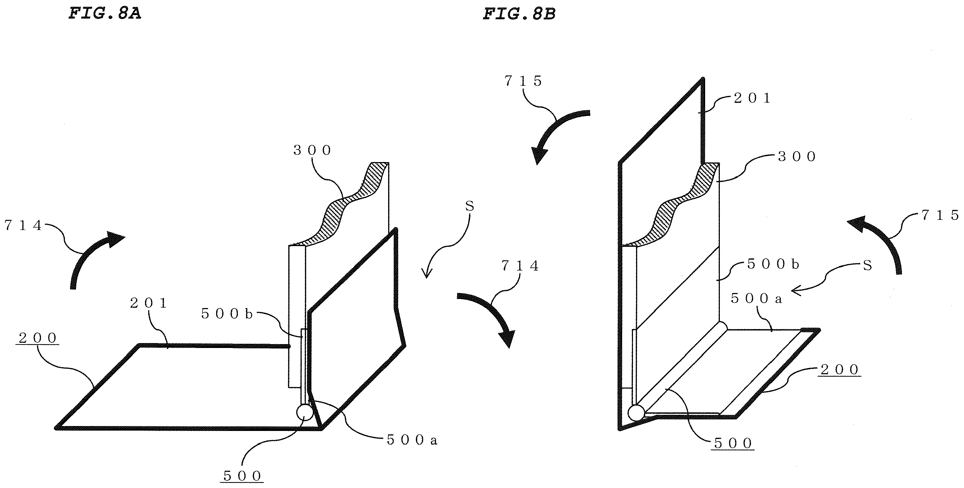

Here, FIGs. 4 to 7 are perspective views of the neighborhood of the handle structure-body 100 of the walking-type tilling machine of the embodiment in the present invention (Nos. 1 to 4), and FIGs. 8A and 8B are schematic perspective views of the neighborhood of a hinge 500 of the walking-type tilling machine of the embodiment in the present invention (Nos. 1 and 2).

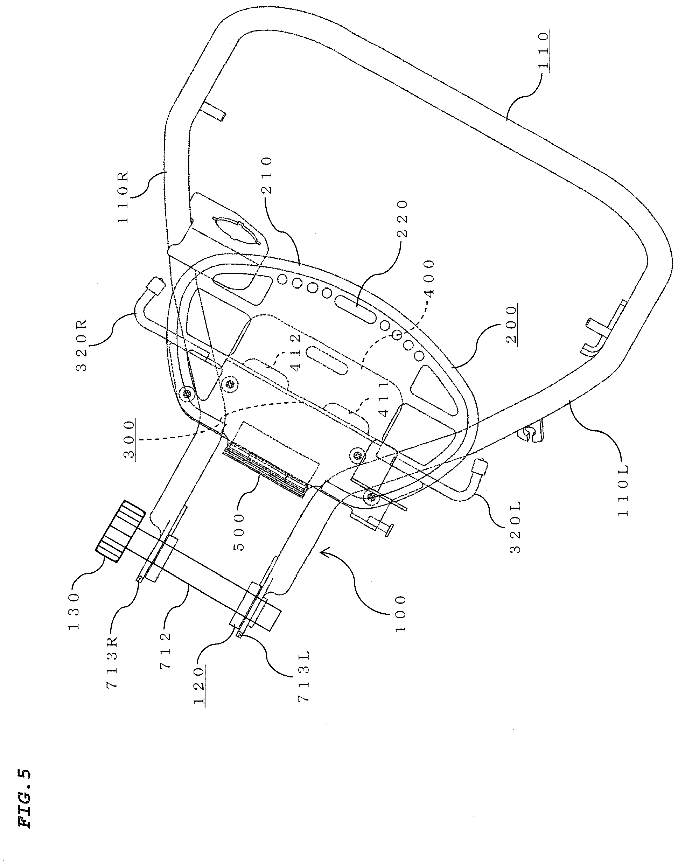

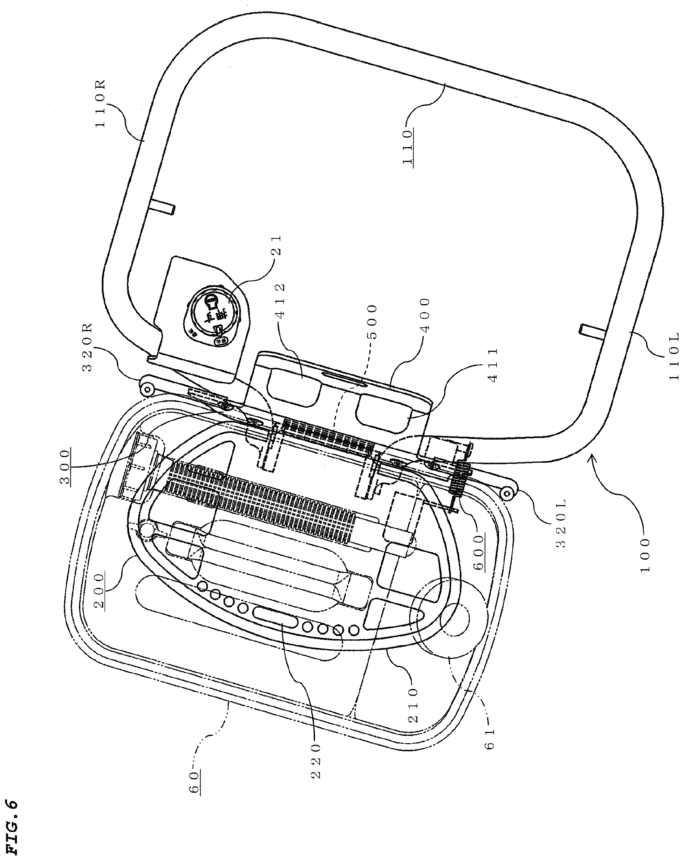

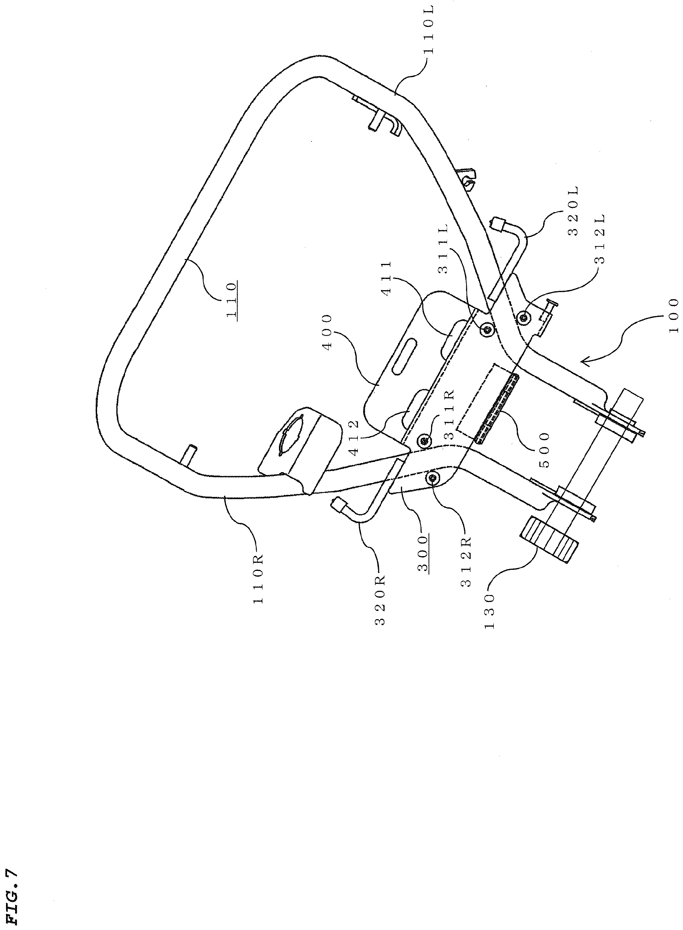

In FIGs. 4 to 7, the handle structure-body 100 is viewed roughly from the normal line direction of the placement face 201. More specifically, in FIGs. 4 and 6, the handle structure-body 100 is viewed in the direction of an arrow 710 (refer to FIG. 1A) roughly from immediately above but, in FIGs. 5 and 7, the handle structure-body 100 is viewed in the direction of an arrow 711 (refer to FIG. 1B) from obliquely above.

In FIG. 6, an engine switch 21 is also shown. In FIG. 7, the oil-supplying tank placement plate 200 is not shown, so that the configurations of the connection member 300 and the like will become easier to understand.

In FIG. 8A, the state where the oil-supplying tank placement plate 200 is used is shown. In FIG. 8B, the state where the oil-supplying tank placement plate 200 is not used is shown. In FIGs. 8A and 8B, the upper portion of the connection member 300 is not shown, so that the configurations of the hinge 500 and the like will become easier to understand.

The handle structure-body 100 has the handle part 110 and a handle frame 120.

The handle part 110 has a left side handle part 110L and a right side handle part 110R.

The left side handle part 110L and the right side handle part 110R are integrally configured as a single pipe member bent in a loop shape, but may be independently configured individually.

The handle part 110 which is the upper portion of the handle structure-body 100 is, utilizing the handle adjustment knob 130, rotatably attached to a rotation fulcrum 712 of the handle frame 120 which is the lower portion of the handle structure-body 100.

A so-called chrysanthemum-washer-style configuration is realized, for which concavity-and-convexity formed on a left side lower portion 713L of the left side handle part 110L, and concavity-and-convexity formed on a side of the handle frame 120 fit each other, and for which concavity-and-convexity formed on a right side lower portion 713R of the right side handle part 110R, and concavity-and-convexity formed on a side of the handle frame 120 fit each other. When the handle adjustment knob 130 is loosened, then the left side handle part 110L and the right side handle part 110R get over the concavity-and-convexity and rotate, and the up-and-down position of the handle part 110 is arbitrarily regulated. When the handle adjustment knob 130 is tightened, then the handle part 110 is fixed.

The connection member 300 is provided which connects the left side handle part 110L and the right side handle part 110R.

The oil-supplying tank placement plate 200 is rotatably attached to the connection member 300.

Since the handle structure-body 100 is utilized for the attachment of the oil-supplying tank placement plate 200, the number of components does not become so much large, the configuration is simple and compact, and light-weighting is realized.

The hinge 500 is a hinge one end part 500a of which is attached to the oil-supplying tank placement plate 200, and another end part 500b of which is attached to the connection member 300.

In the use state, the one end part 500a of the hinge 500 abuts against the another end part 500b of the hinge 500.

Since the hinge 500 is utilized for the attachment of the oil-supplying tank placement plate 200, the number of components does not become so much large, and the configuration is simple and compact.

And, since the one end part 500a of the hinge 500 abuts against the another end part 500b of the hinge 500 in the use state, the oil-supplying tank placement plate 200 on which the oil-supplying tank 60 has been placed is firmly supported.

As is indicated in FIGs. 8A and 8B, the end part of the oil-supplying tank placement plate 200 to which the one end part 500a of the hinge 500 is attached is bent, and the oil-supplying tank placement plate 200 is a plate of an approximate V-shape in a side view. Hence, the one end part 500a of the hinge 500 is attached to an end part of the placement face 201 of the oil-supplying tank placement plate 200, which does not contact the oil-supplying tank 60, but the another end part 500b of the hinge 500 is attached to the reverse face of the connection member 300, the oil-supplying tank 60 placed on the oil-supplying tank placement plate 200 does not interfere with the hinge 500, and a rotation space S of the hinge 500 is sufficiently ensured.

And, in the non-use state where the oil-supplying tank 60 is not placed on the oil-supplying tank placement plate 200, the oil-supplying tank placement plate 200 is made to upwardly rotate, and the handle frame 120 below and the like do not interfere with the oil-supplying tank placement plate 200.

Further, the hinge 500 is between the left side handle part 110L and the right side handle part 110R with respect to the left-and-right direction, and the oil-supplying tank placement plate 200 is less prone to protrude to the outer side with respect to the left-and-right direction, and does not become a hindrance in the case where the worker wants to operate the handle adjustment knob 130 and make the handle part 110 rotate.

A spring 600 is a spring one end part 600a of which is attached to the oil-supplying tank placement plate 200, and another end part 600b of which is attached to the connection member 300.

In the use state where the placement face 201 faces upward, or in the non-use state where the placement face 201 is set along the handle structure-body 100, the energizing force of the spring 600 has an influence in the present embodiment, but may not have an influence.

As is indicated in FIG. 8A, in the use state where the placement face 201 has been made to rotate in the direction of an arrow 715, since the one end part 500a of the hinge 500 which abuts against the another end part 500b of the hinge 500 is pushed by the spring 600, the oil-supplying tank placement plate 200 on which the oil-supplying tank 60 has been placed is firmly supported. Of course, in a use state like this, for example, one portion of the oil-supplying tank placement plate 200 may abut against the connection member 300, or may not abut against the connection member 300. As is indicated in FIG. 8B, in the non-use state where the placement face 201 has been made to rotate in the direction of an arrow 714, the placement face 201 could abut against the handle structure-body 100 and the like because of a permissible difference and, for example, since the placement face 201 which abuts against the connection member 300 is pushed by the spring 600, vibration of the oil-supplying tank placement plate 200 is prevented.

And, also in a transition state between the use state and the non-use state, the energizing force of the spring 600 has an influence. Since a so-called spring fulcrum getting-over principle like this is utilized, a lock member such as a lock lever, a lock pin or the like, which holds the oil-supplying tank placement plate 200 in the use state or the non-use state, is unnecessary, the number of components does not become so much large, and the configuration is simple and compact.

The spring 600 is attached to the left side, and the handle adjustment knob 130 is attached to the right side. Hence, the spring 600 is attached to the opposite side of the handle adjustment knob 130, and does not become a hindrance in the case where the worker wants to operate the handle adjustment knob 130 and make the handle part 110 rotate.

Next, mainly referring to FIGs. 1 to 10, descriptions are further more specifically given regarding the configuration and action of the walking-type tilling machine of the present embodiment.

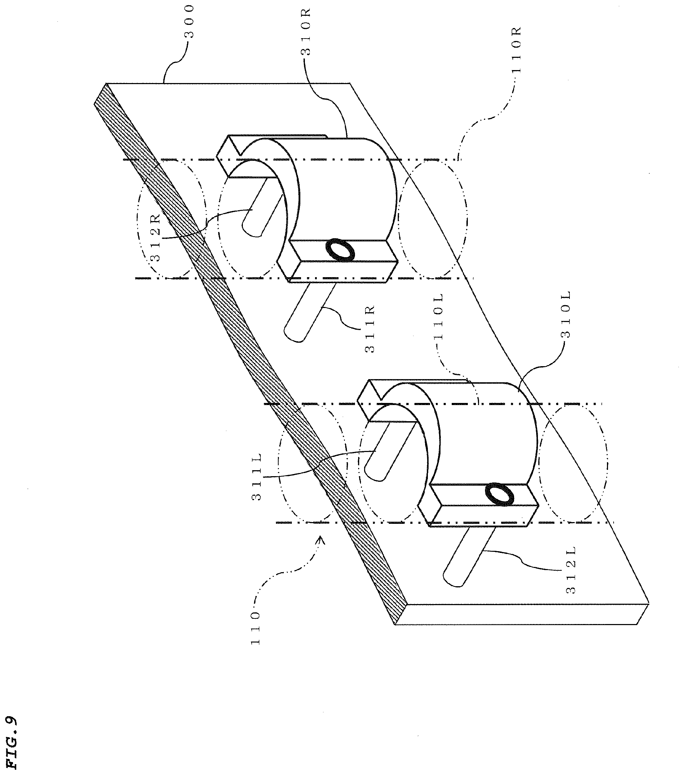

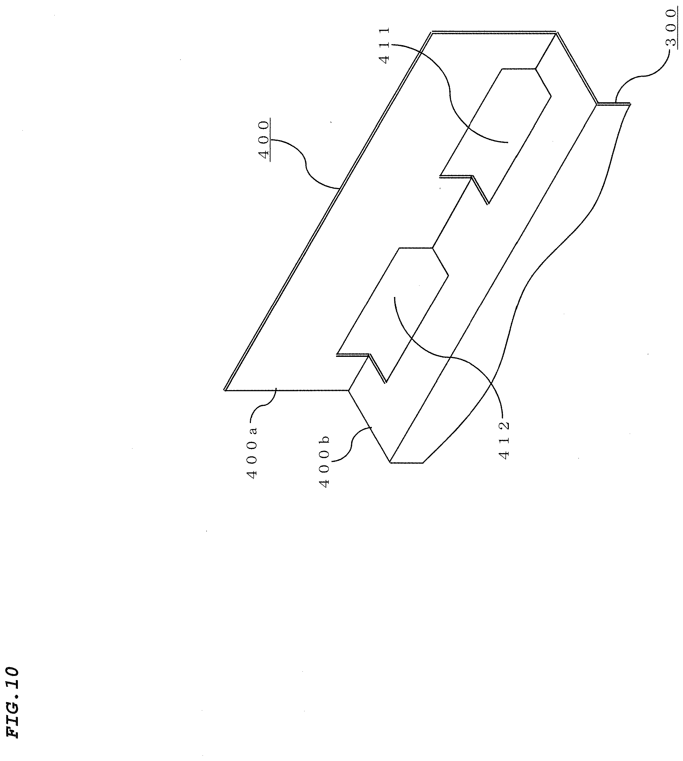

Here, FIG. 9 is a schematic perspective view of the neighborhood of a left side connection member attachment tool 310L and a right side connection member attachment tool 310R of the walking-type tilling machine of the embodiment in the present invention, and FIG. 10 is a schematic perspective view of the neighborhood of a cap rest 400 of the walking-type tilling machine of the embodiment in the present invention.

In FIG. 9, the connection member 300 and the handle part 110 are only partially shown. In FIG. 10, the connection member 300 is only partially shown.
(A) To the fringe part of the oil-supplying tank placement plate 200, an oil-supplying tank placement plate rim 210 is attached. The oil-supplying tank placement plate rim 210 may be configured as a resin member, or may be configured as a resin coating.

As described above, in the use state where the oil-supplying tank 60 is placed on the oil-supplying tank placement plate 200, the oil-supplying tank placement plate 200 is made to rotate so that the placement face 201 faces upward. The oil-supplying tank 60 placed on the oil-supplying tank placement plate 200 is, since the oil-supplying tank placement plate rim 210 functions as a stopper, less prone to frontwardly tumble. And, the oil-supplying tank 60 contacts the oil-supplying tank placement plate 200 but, since the oil-supplying tank placement plate rim 210 functions as an interference prevention member, friction damage is less prone to be generated. Further, the rear portion of the placement face 201 made to rotate so as to face upward occasionally contacts the handle structure-body 100, the connection member 300 or the like but, since the oil-supplying tank placement plate rim 210 functions as an interference prevention member, friction damage is less prone to be generated.

As described above, in the non-use state where the oil-supplying tank 60 is not placed on the oil-supplying tank placement plate 200, the oil-supplying tank placement plate 200 is made to rotate so that the placement face 201 is set along the handle structure-body 100. The left-and-right portion of the placement face 201 made to rotate so as to be set along the handle structure-body 100 occasionally contacts the handle structure-body 100, the connection member 300 or the like but, since the oil-supplying tank placement plate rim 210 functions as an interference prevention member, friction damage is less prone to be generated.

(B) As is indicated in FIG. 9, the connection member 300 is attached to the left side handle part 110L utilizing the left side connection member attachment tool 310L, and is attached to the right side handle part 110R utilizing the right side connection member attachment tool 310R.

The left side connection member attachment tool 310L and the right side connection member attachment tool 310R are configured as resin members of an approximate U-shape in a cross-section view. Hence, the connection member 300 and the left side connection member attachment tool 310L are fastened utilizing left side fastening members 311L and 312L so as to sandwich in the left side handle part 110L, the connection member 300 and the right side connection member attachment tool 310R are fastened utilizing right side fastening members 311R and 312R so as to sandwich in the right side handle part 110R, and bad effect on the handle part 110 such as handle part damage or the like is less prone to be generated.

In the connection member 300, four holes to which the left side fastening members 311L and 312L, and the right side fastening members 311R and 312R are screwed are bored so as to be set along the handle part 110. Hence, the positions of the two holes to which the left side fastening member 311L and the right side fastening member 311R which are at the inner side are screwed are higher than the positions of the two holes to which the left side fastening member 312L and the right side fastening member 312R which are at the outer sides are screwed, and the fastening is firm.

The left side connection member attachment tool 310L and the right side connection member attachment tool 310R are attached to the neighborhood of the branching point where the handle part 110 branches into the left side handle part 110L and the right side handle part 110R. Hence, the distance between the left side connection member attachment tool 310L and the right side connection member attachment tool 310R is determined in correspondence to the distance from the relevant branching point, the attachment position of the connection member 300 is easy to understand at the time of building in a factory and, since the oil-supplying tank placement plate 200 is attachable to the existing handle part 110 without designing alteration such as handle part size alteration or the like, designing freedom-degree is improved.

For example, in the connection member 300, two preliminary holes for adjusting the attachment position of the connection member 300, to which the left side fastening member 312L and the right side fastening member 312R which are at the outer sides are screwed, may be provided. The angles at the imaginary intersection point between the left side handle part 110L and the right side handle part 110R are various but, since the connection member 300 is attachable to the handle part 110 without designing alteration, designing freedom-degree is improved.

And, rotatability of the chrysanthemum-washer-style handle structure-body 100, which utilizes the handle adjustment knob 130, is not affected by the attachment of the oil-supplying tank placement plate 200, and the up-and-down position of the handle part 110 is regulated with facility.

Further, since the connection member 300 which has not been fixed to the handle part 110 with welding or the like is freely detachable/attachable, for example, workability of the cable maintenance working is not affected by the attachment of the oil-supplying tank placement plate 200.

(C) As is indicated in FIG. 10, the cap rest 400 is provided on which a fuel tank cap 51 of the fuel tank 50, and an oil-supplying tank cap 61 of the oil-supplying tank 60 are placed. Since it is not necessary for the worker to hold the fuel tank cap 51 and the oil-supplying tank cap 61, falling-down and loss of the caps, and dirt of the caps due to mud are less prone to be generated.

The connection member 300, and the cap rest 400 of an approximate L-shape in a cross-section view are integrally configured as a single bent plate member. Hence, the number of components does not become so much large, and the configuration is simple and compact.

In the bottom face part of the cap rest 400, two cap holes 411 and 412 into which at least one portion of the cap fits are bored straddling the upper end part 400a and the lower end part 400b of the cap rest 400. Since boring like this of an approximate quadrangle-shape in correspondence to the cap size and the like is utilized, a lateral plate enclosing member such as a frame or the like, which prevents falling-down of the caps, is unnecessary, the number of components does not become so much large, and the configuration is simple and compact.

For example, at least one of the cap holes 411 and 412 may not be provided.

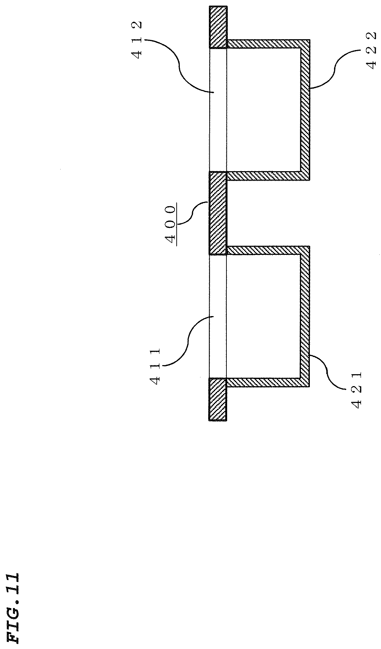

As is indicated in FIG. 11 which is a schematic cross-section view of the neighborhood of the cap rest 400 of the walking-type tilling machine of another embodiment in the present invention, below the cap holes 411 and 412, cap supporting sections 421 and 422 of an approximate U-shape in a cross-section view may be individually provided. Even if the fuel tank cap 51 or the oil-supplying tank cap 61 is small, falling-down of the caps is not generated.

For example, at least one of the cap supporting sections 421 and 422 may not be provided.

(D) A left side hook 320L and a right side hook 320R, which are utilizable for article hanging of a container of a bag-shape in which a PET bottle is, a pouch, a hat or the like, or machine-body fixation at the time of haul-truck loading, are attached to the connection member 300. For example, since a machine-body fixation rope is engagable with both of the left side hook 320L and the right side hook 320R, safety at the time of haul-truck loading is improved.

Since not by direct attachment to a handle, a frame, a weight or the like, the left side hook 320L and the right side hook 320R are attachable without designing alteration such as handle part size alteration or the like, designing freedom-degree is improved.

For example, at least one of the left side hook 320L and the right side hook 320R may not be provided.

(E) To the inclining part of the right side handle part 110R, the engine switch 21 is attached. The engine switch 21 may be configured as a key switch, may be configured as an on/off switch, or may be configured as a push-off switch.

In the present embodiment, the position where the engine switch 21 has been rotated to the right is the engine driving position for engine starting. In the case where a battery is not installed, or where the battery does not function even if the battery is installed, when the recoil starter is pulled, then the engine 20 starts. In the case where a battery is installed, when a key, a button or the like is operated, then the starting motor acts, and the engine 20 starts. And, the engine switch 21, when being lightly pushed, autonomously rotates to the left toward the engine stopping position for engine stopping.

The engine switch 21 is attached to the handle part 110 above, not to the handle frame 120 below. Hence, operability of the engine switch 21 is not affected by the attachment of the oil-supplying tank placement plate 200.

A walking-type tilling machine in the present invention is such that oil-supplying working can be facilitated, and is useful for the purpose of utilizing for a walking-type tilling machine for performing tilling working.

A walking-type tilling machine, comprises:
a machine-body 10;
a tilling device 40 attached to the machine-body 10;
a fuel tank 50 attached to the machine-body 10; and
a handle structure-body 100 which rearwardly extends, the handle structure-body 100 being attached to the machine-body 10, wherein
the walking-type tilling machine comprises an oil-supplying tank placement plate 200 which has a placement face 201 on which a portable oil-supplying tank 60 for performing oil-supplying of the fuel tank 50 is placed, and wherein
the oil-supplying tank placement plate 200 is attached to a front side of the handle structure-body 100.

In the said walking-type tilling machine
the oil-supplying tank placement plate 200 is rotatably attached,
in a use state where the oil-supplying tank 60 is placed on the oil-supplying tank placement plate 200, the oil-supplying tank placement plate 200 can be made to rotate so that the placement face 201 faces upward, and
in a non-use state where the oil-supplying tank 60 is not placed on the oil-supplying tank placement plate 200, the oil-supplying tank placement plate 200 can be made to rotate so that the placement face 201 is set along the handle structure-body 100.

Furthermore, in the said walking-type tilling machine
the handle structure-body 100 has a handle part 110 and a handle frame 120,
the handle part 110 has a left side handle part 110L and a right side handle part 110R,
a connection member 300 is provided which connects the left side handle part 110L and the right side handle part 110R, and
the oil-supplying tank placement plate 200 is rotatably attached to the connection member 300.

The said walking-type tilling machine comprises
a hinge 500 one end part 500a of which is attached to the oil-supplying tank placement plate 200, and another end part 500b of which is attached to the connection member 300, wherein
in the use state, the one end part 500a of the hinge 500 abuts against the another end part 500b of the hinge 500.

The said walking-type tilling machine may further comprise a spring 600 one end part 600a of which may be attached to the oil-supplying tank placement plate 200, and another end part 600b of which may be attached to the connection member 300.

## Claims

1. A walking-type tilling machine, comprising:
a machine-body (10);
a tilling device (40) attached to the machine-body (10);
a fuel tank (50) attached to the machine-body (10);
a handle structure-body (100) which extends upwardly and rearwardly with reference to a frontward movement direction, the handle structure-body (100) being attached to the machine-body (10); and
an oil-supplying tank placement plate (200) which has a placement face (201) on which a portable oil-supplying tank (60) for performing oil-supplying of the fuel tank (50) is placed,
**characterized in that**
the oil-supplying tank placement plate (200) is attached to a front side of the handle structure-body (100) with reference to the frontward movement direction,
the oil-supplying tank placement plate (200) is rotatably attached,
in a use state where the oil-supplying tank (60) is placed on the oil-supplying tank placement plate (200), the oil-supplying tank placement plate (200) is made to rotate so that the placement face (201) faces upward, and
in a non-use state where the oil-supplying tank (60) is not placed on the oil-supplying tank placement plate (200), the oil-supplying tank placement plate (200) is made to rotate so that the placement face (201) is set along the handle structure-body (100), wherein
the handle structure-body (100) has a handle part (110) and a handle frame (120),
the handle part (110) has a left side handle part (110L) and a right side handle part (110R),
a connection member (300) is provided which connects the left side handle part (110L) and the right side handle part (110R),
the oil-supplying tank placement plate (200) is rotatably attached to the connection member (300), and
the walking-type tilling machine comprises a hinge (500) one end part (500a) of which is attached to the oil-supplying tank placement plate (200), and another end part (500b) of which is attached to the connection member (300).

## Patentansprüche

1. Schub-Feldbestellungsmaschine, umfassend:
einen Maschinenkörper (10);
eine Feldbestellungsvorrichtung (40), die an dem Maschinenkörper (10) angebracht ist,
einen Treibstofftank (50), der an dem Maschinenkörper (10) angebracht ist;
einen Griffstrukturkörper (100), der sich nach oben und hinten in Bezug auf eine Bewegungsrichtung nach vorne erstreckt, wobei der Griffstrukturkörper (100) an dem Maschinenkörper (10) angebracht ist; und
eine Positionierplatte (200) für einen Ölversorgungstank, der eine Positionierfläche (201) aufweist, auf der ein tragbarer Ölversorgungstank (60) zum Ausführen der Ölversorgung des Treibstofftanks (50) positioniert ist, **dadurch gekennzeichnet, dass**
die Positionierplatte (200) für den Ölversorgungstank an einer Stirnseite des Griffstrukturkörpers (100) in Bezug auf die Bewegungsrichtung nach vorne angebracht ist,
die Positionierplatte (200) für den Ölversorgungstank drehbar angebracht ist,
in einem Gebrauchszustand, in dem der Ölversorgungstank (60) auf der Positionierplatte (200) des Ölversorgungstanks positioniert ist, die Positionierplatte (200) für den Ölversorgungstank derart zum Drehen veranlasst wird, dass die Positionierfläche (201) nach oben weist, und
in einem Nichtgebrauchszustand, in dem der Ölversorgungstank (60) nicht auf der Positionierplatte (200) des Ölversorgungstanks platziert ist, die Positionierplatte (200) für den Ölversorgungstank derart zum Drehen veranlasst wird, dass die Positionierfläche (201) entlang des Griffstrukturkörpers (100) eingestellt wird, wobei
der Griffstrukturkörper (100) einen Griffteil (110) und einen Griffrahmen (120) aufweist,
der Griffteil (110) einen linken Griffteil (110L) und einen rechten Griffteil (110R) aufweist,
ein Verbindungselement (300) vorgesehen ist, welches den linken Griffteil (110L) und den rechten Griffteil (110R) verbindet,
die Positionierplatte (200) für den Ölversorgungstank an dem Verbindungselement (300) drehbar angebracht ist, und
die Schub-Feldbestellungsmaschine ein Scharnier (500) umfasst, dessen eines Endteil (500a) an der Positionierplatte (200) des Ölversorgungstanks angebracht ist und dessen anderes Endteil (500b) an dem Verbindungselement (300) angebracht ist.

## Revendications

1. Machine-marcheuse de remplissage, comportant :
un corps de machine (10) ;
un dispositif de remplissage (40) rapporté au corps de machine (10) ;
un réservoir de carburant (50) rapporté au corps de machine (10) ;
un corps de structure d'étrier (100) s'étendant vers le haut et vers l'arrière par rapport à une direction de mouvement en avant, le corps de structure d'étrier (100) étant fixé au corps de machine (10); et
une plaque de positionnement (200) du réservoir d'approvisionnement en huile présentant une face de positionnement (201) sur laquelle est positionné un réservoir d'approvisionnement en huile portable (60) pour l'approvisionnement en huile du réservoir de carburant (50),
**caractérisée en ce que**
la plaque de positionnement (200) du réservoir d'approvisionnement en huile se trouve fixée à un côté frontal du corps de structure d'étrier (100) par rapport à la direction de mouvement en avant,
la plaque de positionnement du réservoir d'approvisionnement en huile (200) est montée à rotation,
dans un état d'utilisation dans lequel le réservoir d'approvisionnement en huile (60) se trouve placé sur la plaque de positionnement (200) du réservoir d'approvisionnement en huile, la plaque de positionnement (200) du réservoir d'approvisionnement en huile est prévue de tourner de manière à ce que la face de positionnement (201) soit orientée vers le haut, et
dans un état d'arrêt dans lequel le réservoir d'approvisionnement en huile (60) ne se trouve pas placé sur la plaque de positionnement (200) du réservoir d'approvisionnement en huile, la plaque de positionnement (200) du réservoir d'approvisionnement en huile est conçue pour tourner de manière à ce que la face de positionnement (201) soit orientée le long du corps de structure d'étrier (100),
le corps de structure d'étrier (100) présentant une partie d'étrier (110) et un cadre d'étrier (120),
la partie d'étrier (110) présente une partie d'étrier gauche (110L) ainsi qu'une partie d'étrier droite (110R),
un élément de jonction (300) étant prévu, reliant la partie d'étrier gauche (110L) à la partie d'étrier droite (110R),
la plaque de positionnement (200) du réservoir d'approvisionnement en huile se trouvant montée à rotation à l'élément de jonction (300), et
la machine-marcheuse de remplissage comportant une charnière (500) dont une extrémité (500a) est fixée à la plaque de positionnement (200) du réservoir d'approvisionnement en huile et dont une autre extrémité (500b) est fixée à l'élément de jonction (300).
